# EUROPÄISCHE PATENTSCHRIFT

(11) **EP 3 469 909 B1**
(45) Veröffentlichungstag und Bekanntmachung des Hinweises auf die Patenterteilung: **17.06.2020**
(21) Anmeldenummer: 18194181.6
(22) Anmeldetag: 13.09.2018
(51) Int. Cl.: A21C 1/06, B01F 15/00

(54) **KONTINUIERLICH ARBEITENDE TEIGKNETVORRICHTUNG**
CONTINUOUSLY OPERATING DOUGH KNEADING DEVICE
DISPOSITIF DE PÉTRISSAGE DE PÂTE FONCTIONNANT EN CONTINU

(30) Priorität: 11.10.2017 DE 102017123632
(43) Veröffentlichungstag der Anmeldung: 17.04.2019
(73) Patentinhaber: Zeppelin Systems GmbH, 63322 Rödermark (DE)
(72) Erfinder: Hofmann, Andreas, 60438 Frankfurt/Main (DE); Stasch, Jörg, 35584 Wetzlar (DE)
(74) Vertreter: Keil & Schaafhausen Patentanwälte PartGmbB

(56) Entgegenhaltungen:
- DE-A1- 19 601 184
- DE-A1-102005 019 082
- DE-A1-102012 216 206
- US-A- 3 910 177

## Beschreibung

Die Erfindung betrifft eine kontinuierlich arbeitende Teigknetvorrichtung mit den Merkmalen des Oberbegriffs des Anspruch 1.

Eine derartige Teigknetvorrichtung wird unter der Bezeichnung "Codos" von der Zeppelin Systems GmbH vertrieben. Sie ist in der Lage, kontinuierlich größere Mengen eines Teigs zu kneten. Hierzu werden die Zutaten des Teigs über den Einlass in den Trograum eingeführt, durch die Knetwerkzeuge im Knetraum miteinander vermischt und geknetet, und dann durch den Auslass ausgegeben.

Beim Wechseln einer Rezeptur oder aus hygienischen Gründen in vorbestimmten Zeitintervallen muss die Teigknetvorrichtung gereinigt werden. Hierzu wird zunächst der Trograum, soweit es möglich ist, durch ein Laufenlassen der Knetwerkzeuge entleert, d.h. während dieses Entleervorganges werden keine neuen Zutaten des Teigs zugeführt. Reste des Inhalts des Trograums, die nicht durch die Knetwerkzeuge herausgefördert werden können, müssen dann von Hand entfernt werden. Eine Bedienungsperson muss die dann noch an der Wand des Trograums anhaftenden Rückstände des Teigs mithilfe eines Wasserstrahls entfernen. Auch bei Verwendung eines Wasserstrahls mit einem hohen Druck ist dieser Vorgang zeitaufwändig. Er erfordert ein gewisses Geschick. Der Trograum muss zu diesem Zweck geöffnet werden, so dass herausspritzendes Wasser mit Teigresten die Umgebung verschmutzt.

DE 196 01 184 A1 zeigt ein Reinigungsverfahren für Maschinen zur Herstellung von Teigwaren. Die Maschinen beinhaltet eine als Mischer bezeichnete Baueinheit mit einer länglichen Wanne, in der die Vermischung von unterschiedlichen Zutaten, aus denen ein Teig hergestellt wird, stattfindet. Unterhalb der Wanne ist eine Röhre angeordnet, in der eine archimedische Schraube angeordnet ist, mit der ein Teig aus Düsen ausgetragen werden kann.

DE 10 2012 216 206 A1 zeigt eine Vorrichtung zum Reinigen eines Bearbeitungsraumes einer Teigbearbeitungsstation. Die Teigbearbeitungsstation weist einen drehbaren Behälter auf, in den Mischwerkzeuge eintauchen können. Der Behälter ist durch einen Deckel verschlossen, durch die ein oder mehrere Sprühlanzen geführt sind, wobei an jede Sprühlanze ein Sprühkopf angeordnet ist.

US 3 910 177 A zeigt eine Anlage zum Herstellen von Teig mit einem Behälter, in dem eine oder mehrere Sprühdüsen angeordnet sind, die zur Reinigung des Tanks verwendet werden können.

Der Erfindung liegt die Aufgabe zugrunde den Betrieb der Teigknetvorrichtung komfortabel zu machen.

Diese Aufgabe wird bei einer kontinuierlich arbeitenden Teigknetvorrichtung der eingangs genannten Art durch die Merkmale des Anspruchs 1 gelöst.

Man kann nun mithilfe der Spritzdüse bei geschlossenem Trograum eine Reinigung vornehmen, indem man einen Strahl einer Reinigungsflüssigkeit, im einfachsten Fall Wasser, aus der Spritzdüse austreten lässt. Dieser Strahl ist in der Lage, die an der Wand des Trograumes und an den Knetwerkzeugen anhaftenden Teigreste abzulösen und mit der Reinigungsflüssigkeit aus dem Trograum herauszuspülen. Letztendlich ist es hier nur noch erforderlich, die austretende Reinigungsflüssigkeit mit den Teigresten aufzufangen. Die Umgebung wird nicht mehr verschmutzt. Die Spritzdüse kann durchaus für einen höheren Druck, beispielsweise 3 bis 10 bar, ausgelegt sein, so dass die Teigreste mit einer gewissen Reinigungsleistung von den Wänden abgelöst werden können. Eine erhöhte Arbeitskraft einer Bedienungsperson ist hierfür nicht erforderlich, weil die Spritzdüsen in der Teigknetvorrichtung gehalten sind. Die Teigknetvorrichtung nimmt also den "Rückstoß" der Spritzdüse auf.

Der Trograum ist in einem Trog angeordnet, der mehrere Wandabschnitte aufweist, wobei mindestens zwei benachbarte Wandabschnitte einen Winkel miteinander einschließen und ein Strahl der Spritzdüse unter einem Winkel auf mindestens einen Wandabschnitt gerichtet ist, wobei der von diesem Wandabschnitt reflektierte Strahl in einen Bereich des Knetraums gerichtet ist, der gegenüber der Spritzdüse durch die Knetwerkzeuge abgeschaltet ist.

Auf diese Weise ist es möglich, auch solche Abschnitte der Wand des Trograumes zu reinigen, die im Schatten eines Knetwerkzeugs liegen, durch einen direkten Strahl von der Spritzdüse auf die Wand also nicht erreicht werden können.

Vorzugsweise schließen zwei Wandabschnitte einen stumpfen Winkel miteinander ein. Dies ergibt auf einfache Weise die gewünschten Reflektionsverhältnisse.

Auch ist von Vorteil, wenn der Strahl der Spritzdüse unter einem stumpfen Winkel auf den Wandabschnitt gerichtet ist. Auch damit ergeben sich die gewünschten Verhältnisse, weil der Strahl mit entgegensetzt gleichem Winkel zum Auftreffwinkel abgestrahlt wird.

Vorzugsweise ist die Spritzdüse um eine Rotationsachse drehbar gelagert. Damit ist der Strahl der Spritzdüse in der Lage, einen größeren Bereich der Wandabschnitte zu erreichen.

Vorzugsweise tritt der Strahl der Spritzdüse mit einem radialen Abstand zur Rotationsachse aus der Spritzdüse aus und weist eine

Richtungskomponente auf, die von einer radialen Richtung relativ zur Rotationsachse abweicht. Damit wirkt eine Reaktionskraft, die beim Ausstoßen des Strahls aus der Spritzdüse entsteht, mit einem Hebelarm und einer tangentialen Komponente auf die Spritzdüse, so dass die Spritzdüse durch den Strahl in Rotation versetzt wird. Die Rotation der Spritzdüse ergibt sich also beim Betrieb der Spritzdüse automatisch.

Vorzugsweise ist die Spritzdüse höhenverstellbar gelagert. Dies hat den Vorteil, dass man durch eine Höhenverstellung der Spritzdüse andere Bereiche an den jeweiligen Wandabschnitten erreichen kann. Damit ergeben sich auch andere Reflektionswinkel und somit andere Strahlrichtungen, so dass die Abreinigung der Wand des Trograums weiter verbessert wird.

Bevorzugterweise ist vorgesehen, dass die Spritzdüse in eine Position außerhalb des Trograums verlagerbar ist. Man kann die Spritzdüse also beispielsweise während des Betriebs der Teigknetvorrichtung, bei der diese einen Teig knetet, aus dem Trograum herausfahren, so dass die Gefahr einer Verschmutzung der Spritzdüse durch den Teig oder Komponenten klein gehalten wird.

Vorzugsweise ist die Spritzdüse in einer Buchse gelagert, die einen Abschnitt aufweist, in der die Spritzdüse von einem radialen Spalt umgeben ist. Man kann diese Ausbildung ausnutzen, um die Düse selbstreinigend auszubilden. Zu diesem Zweck muss man sie lediglich beim Herausfahren aus dem Trograum weiter mit Reinigungsflüssigkeit beschicken. Die Reinigungsflüssigkeit wird dann in dem Spalt zu der Spritzdüse zurückreflektiert und kann somit Verschmutzungen, die sich möglicherweise an der Spritzdüse angelagert haben, entfernen.

Vorteilhafterweise ist die Spritzdüse in einem Deckel des Trograums angeordnet. Zum Kneten eines Teiges ist der Deckel geschlossen. Auch beim Reinigungsvorgang kann der Deckel geschlossen bleiben. Allerdings hat man nach dem Öffnen des Deckels einen weitgehend ungehinderten Zugang zur Spritzdüse.

Vorzugsweise sind mehrere Spritzdüsen in einer Richtung parallel zu einer Achsrichtung der Knetwerkzeuge hintereinander angeordnet. Man kann beispielsweise Spritzdüsen in vorbestimmten Abständen anordnen, wobei die Abstände beispielsweise im Bereich von 20 bis 80 cm liegen. Damit ist man in der Lage, mit einer derartigen Spritzdüsenanordnung auch einen längeren Trograum zu reinigen.

Bevorzugterweise ist die Spritzdüse mit einer Steuereinrichtung verbunden, die während des Betriebs der Spritzdüse die Knetwerkzeuge antreibt. Damit werden die Knetwerkzeuge beispielsweise in Rotation versetzt, so dass ein aus der Spritzdüse austretender Strahl oder ein von den Wandabschnitten des Trograums reflektierter Strahl in der Lage ist, alle Bereiche der Knetwerkzeuge zu erreichen und dort anhaftende Teigreste zu entfernen.

Die Erfindung wird im Folgenden anhand eines bevorzugten Ausführungsbeispiels in Verbindung mit der Zeichnung beschrieben. Hierin zeigen:
- Fig. 1: eine schematische Querschnittsansicht einer Teigknetvorrichtung,
- Fig. 2: einen schematischen Längsschnitt der Teigknetvorrichtung und
- Fig. 3: die Teigknetvorrichtung mit Deckel, teilweise im Aufriss.

Eine kontinuierlich arbeitende Teigknetvorrichtung 1 weist einen Trograum 2 auf, der von einem Deckel 3 verschlossen ist. In einem Teil des Trograums 2, der als Knetraum 4 bezeichnet wird, sind zwei Knetwerkzeuge 5 angeordnet. Es handelt sich also um ein Doppelwellen-Knetsystem. Ein Antrieb 6 an einem Ende des Knetraums 4 treibt die Knetwerkzeuge 5 an. Es sind auch mehr als zwei Knetwerkzeuge 5 oder nur ein einzelnes Knetwerkzeug möglich.

Der Trograum 2 ist zwischen einem Einlass 7 und einem Auslass 8 angeordnet. Über den Einlass 7 können kontinuierlich die Bestandteile oder Komponenten eines Teiges zugeführt werden, die dann mithilfe der Knetwerkzeuge durchmischt und verknetet werden. Dabei entsteht ein Teig, der am Auslass 8 aus dem Knetraum 4 austritt.

Der Knetraum 4 nimmt nur einen Teil des Trograums 2 ein. Der sich bildende Teig befindet sich mehr oder weniger ausschließlich im Knetraum 4.

Aus hygienischen Gründen muss die Teigknetvorrichtung 1 von Zeit zu Zeit gereinigt werden. Auch beim Wechsel der Rezeptur ist eine Reinigung erforderlich. Die Reinigung erfolgt in einem ersten Schritt dadurch, dass der Knetraum 4 leergefahren wird. Dies kann man dadurch bewerkstelligen, dass man die Knetwerkzeuge 5, die auch eine Förderwirkung haben, weiterbetreibt, ohne dass man am Einlass 7 weiter Komponenten des Teigs zugibt. In vielen Fällen ist es allerdings empfehlenswert, den Trograum 2 bei diesem Leerfahren zu fluten, d.h. mit einer Reinigungsflüssigkeit zu befüllen. Als Reinigungsflüssigkeit wird in vielen Fällen Wasser verwendet. Wenn nachfolgend der Begriff "Wasser" verwendet wird, dann ist dieser Begriff allgemein als "Reinigungsflüssigkeit" zu verstehen.

Auch nach dem Fluten des Trograums 2 mit Wasser verbleibt normalerweise ein gewisser Anteil des Teiges im Knetraum 4. Dies sind insbesondere Teigreste, die an einer Wand 9 des Trograums anhaften. Weiterhin sind dies Teigreste, die an den Knetwerkzeugen 5 anhaften.

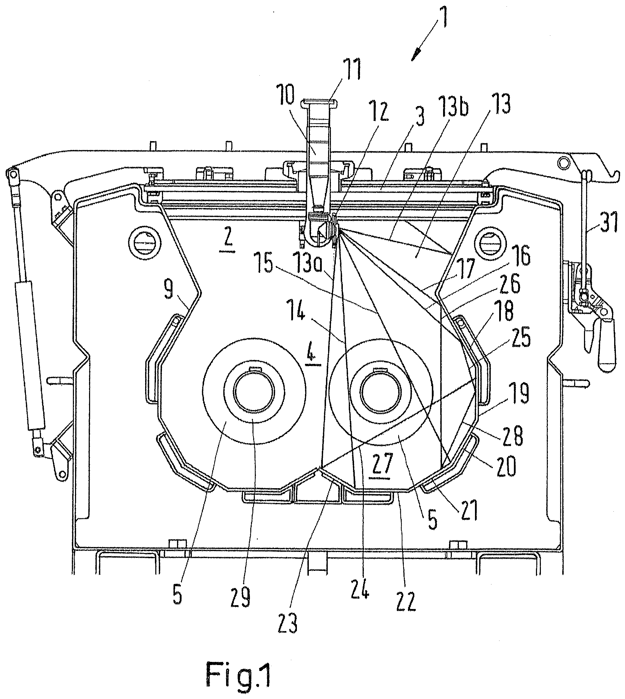

Um auch derartige Teigreste entfernen zu können, sind im Deckel 3 mehrere Spritzvorrichtungen 10 angeordnet. Fig. 1 zeigt eine derartige Spritzvorrichtung 10. Die Spritzvorrichtung 10 weist einen Anschluss 11 auf, über den Wasser zugeführt werden kann. Das Wasser kann durchaus auch unter einem höheren Druck stehen, beispielsweise 3 bis 10 bar, vorzugsweise 4 bis 8 bar und insbesondere 6 bar. Weiterhin weist die Spritzvorrichtung 10 eine Spritzdüse 12 auf, die zumindest während eines Reinigungsvorgangs im Trograum 2 angeordnet ist.

Die Spritzdüse 12 stößt einen Strahl 13 aus, von dem zwei Grenzen 13a, 13b eingezeichnet sind. Um die weitere Erläuterung zu vereinfachen, sind weitere Teilstrahlen 14, 15, 16, 17 eingezeichnet, mit denen die Funktionsweise der Spritzdüse 12 näher erläutert werden soll. Es wird aber festgehalten, dass sich auch zwischen den Teilstrahlen 14-17 Wasser befinden kann, das aus der Spritzdüse 12 ausgestoßen wird.

Die Wand 9 des Trograums weist mehrere Wandabschnitte 18-23 auf, wobei jeweils zwei benachbarte Wandabschnitte einen stumpfen Winkel miteinander einschließen. Der Winkel ist auf jeden Fall größer als 90°, bevorzugterweise beträgt er mindestens 120° und besonders bevorzugt beträgt der Winkel mindestens 140°. Die Spritzdüse 12 stößt nun den Strahl 13 so aus, dass Komponenten dieses Strahls, also die dargestellten Teilstrahlen 14-17, so auf die Wandabschnitte 18-23 treffen, dass sie beim Auftreffen einen stumpfen Winkel mit dem jeweiligen Wandabschnitt 18-23 einschließen. Dies ist hier so zu verstehen, dass die dargestellten Teilstrahlen nicht in sich selbst reflektiert werden. Es entstehen vielmehr reflektierte Strahlen 24-26, die so gerichtet sind, dass sie einen Bereich 27 des Knetraums 4 erreichen, der gegenüber der Spritzdüse 12 durch die Knetwerkzeuge 5 abgeschattet ist. Beispielsweise erzeugt der Teilstrahl 17 den reflektierten Strahl 26, der in diesen abgeschatteten Bereich 27 hineingerichtet ist. Der Teilstrahl 16 erzeugt einen reflektierten Strahl 25, der am Wandabschnitt 19 weiter reflektiert wird und einen weiter reflektierten Strahl 27 bildet, der ebenfalls in den abgeschatteten Bereich 28 gerichtet ist. Aus Gründen der Übersicht sind nur einige wenige Teilstrahlen 14-17 eingezeichnet. Man kann sich aber ohne weiteres vorstellen, dass auf diese Weise auch die Wandabschnitte 21, 22 im abgeschatteten Bereich 27 von Wasserstrahlen erreicht werden und somit abgereinigt werden.

Dargestellt sind die Verhältnisse für eine Hälfte, im vorliegenden Fall die rechte Hälfte des Trograums 2. Die andere Hälfte, nämlich die linke Hälfte, ist im Prinzip spiegelsymmetrisch aufgebaut. Wenn die Spritzvorrichtung 10 in der Mitte zwischen den beiden Hälften angeordnet ist, kann sie zur Reinigung beider Hälften verwendet werden.

Die Knetwerkzeuge 5 weisen jeweils eine Welle 29 auf, mit der sie drehbar angetrieben sind. Wenn man beim Betrieb der Spritzdüse 12 die Knetwerkzeuge 5 weiter rotieren lässt, ist lediglich der von der Welle 29 abgeschattete Bereich zu berücksichtigen. Ansonsten geben die Knetwerkzeuge 5 bei jeder Umdrehung mindestens einmal einen Bereich zwischen einem jeweiligen Wandabschnitt und der Spritzdüse 12 frei.

Die Spritzdüse 12 ist um eine Rotationsachse drehbar gelagert. Ein zusätzlicher Antrieb ist hier nicht erforderlich. Der Strahl 13 der Spritzdüse tritt mit einem radialen Abstand zur Rotationsachse aus der Spritzdüse aus und weist eine Richtungskomponente auf, die von einer radialen Richtung relativ zur Rotationsachse abweicht. Damit hat der Strahl eine tangentiale Komponente. Die "Rückstoßkraft" des Strahls treibt dann über den Abstand zur Rotationsachse, der einen Hebelarm bildet, die Spritzdüse 12 rotatorisch an.

Darüber hinaus ist die Spritzdüse 12 höhenverstellbar gelagert. Durch eine Veränderung der Position relativ zu den Knetwerkzeugen 5 wird der Auftreffwinkel der Spritzdüse auf die Wandabschnitte 18-23 verändert, so dass man auch auf diese Weise erreichen kann, dass alle Wandabschnitte von dem Strahl 13 getroffen und abgereinigt werden können.

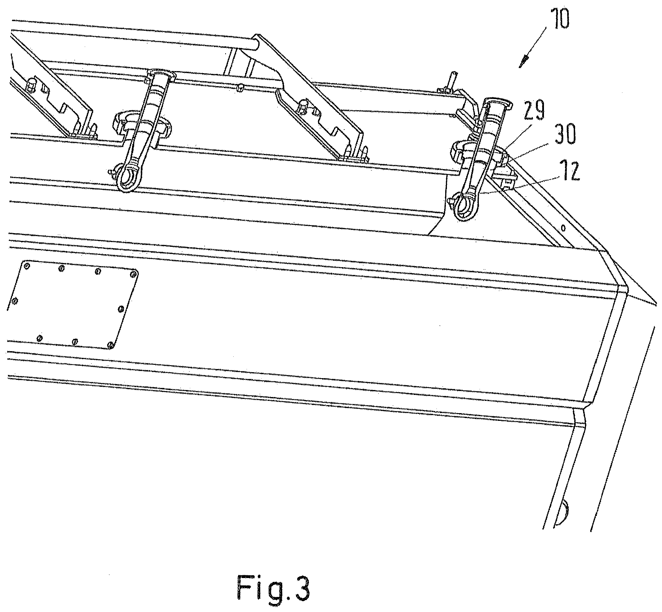

Die Spritzdüse 12 ist, wie man dies in Fig. 3 erkennen kann, in einer Buchse 29 gelagert, die einen Abschnitt aufweist, in der die Spritzdüse 12 von einem radialen Spalt 30 umgeben ist.

Wenn man nun die Spritzdüse 12 in eine Position außerhalb des Trograums 2 verlagert und dabei die Spritzdüse 12 weiter betreibt, dann reinigt sich die Spritzdüse 12 sozusagen von selbst. Der Strahl trifft auf die Innenwand der Buchse 29 im Ringspalt 30 und wird dort reflektiert, so dass er möglicherweise an der Spritzdüse 12 anhaftende Teigreste oder andere Verschmutzungen abreinigen kann. Die Buchse 29 kann auch in Form eines Kugelhahns ausgebildet sein. Wenn man die Spritzvorrichtung 10 aus dem Deckel 3 entnommen hat, kann man die dann verbleibende Öffnung durch den Kugelhahn verschließen.

In nicht näher dargestellter Weise ist die Spritzdüse 12 mit einer Steuereinrichtung verbunden, die während des Betriebs der Spritzdüse die Knetwerkzeuge antreibt. Damit lässt sich die Reinigung weiter automatisieren. Man kann die Spritzdüse 12 dabei durchaus intermittierend betreiben und auch die Knetwerkzeuge 5 intermittierend betreiben. Man kann dann eine gewisse Einwirkungszeit für das Wasser auf die Teigreste zulassen.

Ein Teil des Strahls 13 kann auch zur Innenseite des Deckels 3 reflektiert werden, um auch die Innenseite, d.h. die dem Trograum 2 zugewandte Seite des Deckels 3 zu reinigen.

Der Deckel 3 kann nach Lösen einer Verschlusseinrichtung 31 geöffnet werden, so dass die Spritzdüse 12 praktisch frei zugänglich ist.

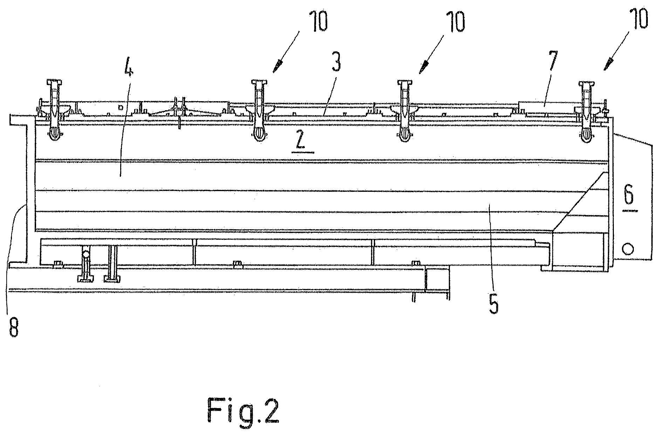

Wie man in Fig. 2 erkennen kann, sind über die Länge des Trograums 2 verteilt, also parallel zur Rotationsachse der Knetwerkzeuge 5, mehrere Spritzvorrichtungen 10 mit einem Abstand hintereinander angeordnet. Der Abstand liegt in einer Größenordnung von 20 bis 80 cm, so dass man in der Lage ist, auch einen längeren Trograum zuverlässig zu reinigen.

## Patentansprüche

1. Kontinuierlich arbeitende Teigknetvorrichtung (1) mit einem zwischen einem Einlass (7) und einem Auslass (8) angeordneten Trograum (2), der einen Knetraum (4) aufweist, in dem Knetwerkzeuge (5) angeordnet sind, wobei im Trograum (2) mindestens eine Spritzdüse (12) angeordnet ist und der Trograum (2) in einem Trog angeordnet ist, der mehrere Wandabschnitte (18-23) aufweist, wobei mindestens zwei benachbarte Wandabschnitte (18-23) einen Winkel miteinander einschließen und ein Strahl (13) der Spritzdüse (12) unter einem Winkel auf mindestens einen Wandabschnitt (18-23) gerichtet ist, wobei der von diesem Wandabschnitt (18-23) reflektierte Strahl in einen Bereich (27) des Knetraums (4) gerichtet ist, der gegenüber der Spritzdüse (12) durch die Knetwerkzeuge (5) abgeschattet ist.

2. Teigknetvorrichtung nach Anspruch 2, **dadurch gekennzeichnet, dass** die zwei Wandabschnitte (18-23) einen stumpfen Winkel miteinander einschließen.

3. Teigknetvorrichtung nach Anspruch 1 oder 2, **dadurch gekennzeichnet, dass** der Strahl (13) der Spritzdüse (12) unter einem stumpfen Winkel auf den Wandabschnitt (18-23) gerichtet ist.

4. Teigknetvorrichtung nach einem der Ansprüche 1 bis 3, **dadurch gekennzeichnet, dass** die Spritzdüse (12) um eine Rotationsachse drehbar gelagert ist.

5. Teigknetvorrichtung nach Anspruch 4, **dadurch gekennzeichnet, dass** der Strahl (13) der Spritzdüse (12) mit einem radialen Abstand zur Rotationsachse aus der Spritzdüse (12) austritt und eine Richtungskomponente aufweist, die von einer radialen Richtung relativ zur Rotationsachse abweicht.

6. Teigknetvorrichtung nach einem der Ansprüche 1 bis 5, **dadurch gekennzeichnet, dass** die Spritzdüse (12) höhenverstellbar gelagert ist.

7. Teigknetvorrichtung nach Anspruch 6, **dadurch gekennzeichnet, dass** die Spritzdüse (12) in eine Position außerhalb des Trograums (2) verlagerbar ist.

8. Teigknetvorrichtung nach Anspruch 6 oder 7, **dadurch gekennzeichnet, dass** die Spritzdüse (12) in einer Buchse (29) gelagert ist, die einen Abschnitt aufweist, in der die Spritzdüse (12) von einem radialen Spalt (30) umgeben ist.

9. Teigknetvorrichtung nach einem der Ansprüche 1 bis 8, **dadurch gekennzeichnet, dass** die Spritzdüse (12) in einem Deckel (3) des Trograums (2) angeordnet ist.

10. Teigknetvorrichtung nach einem der Ansprüche 1 bis 9, **dadurch gekennzeichnet, dass** mehrere Spritzdüsen (12) in einer Richtung parallel zu einer Achsrichtung der Knetwerkzeuge (5) hintereinander angeordnet sind.

11. Teigknetvorrichtung nach einem der Ansprüche 1 bis 10, **dadurch gekennzeichnet, dass** die Spritzdüse (12) mit einer Steuereinrichtung verbunden ist, die während des Betriebs der Spritzdüse (12) die Knetwerkzeuge (5) antreibt.

## Claims

1. A continuously operating dough kneading device (1) with a trough area (2) which is arranged between an inlet (7) and an outlet (8) and comprises a kneading area (4) in which kneading tools (5) are arranged, wherein in the trough area (2) at least one nozzle (12) is arranged and the trough area (2) is arranged in a trough which comprises a plurality of wall sections (18-23) wherein at least two adjacent wall sections (18-23) form an angle with regard to each other and a jet (13) of the nozzle (12) is directed at an angle onto at least one wall section (18-23), wherein the jet reflected from this wall section (18-23) is directed to an area (27) of the kneading area (4) which screened off from the nozzle (12) by the kneading tools (5).

2. The dough kneading device according to claim 1, **characterised in that** the two wall sections (18-23) form an obtuse angle with regard to each other.

3. The dough kneading device according to claim 1 or 2, **characterised in that** the jet (13) of the nozzle (12) is directed at the wall section (18-23) at an obtuse angle.

4. The dough kneading device according to any one of claims 1 to 3, **characterised in that** the nozzle (12) is borne in a rotating manner about an axis of rotation.

5. The dough kneading device according to claim 4, **characterised in that** the jet (13) of the nozzle (12) emerges from the nozzle (12) at a radial distance from the axis of rotation and has a directional component which deviates from a radial direction relative to the axis of rotation.

6. The dough kneading device according to any one of claims 1 to 5, **characterised in that** the nozzle (12) is borne in a height-adjustable manner.

7. The dough kneading device according to claim 6, **characterised in that** the nozzle (12) is displaceable into a position outside the trough area (2).

8. The dough kneading device according to claim 6 or 7, **characterised in that** the nozzle (12) is borne in a socket (29) which comprises a section in which the nozzle (12) is surrounded by a radial gap (30).

9. The dough kneading device according to any one of claims 1 to 8, **characterised in that** the nozzle (12) is arranged in a cover (3) of the trough area (2).

10. The dough kneading device according to any one of claims 1 to 9, **characterised in that** several nozzles (12) are arranged one after the other in a direction parallel to the axial direction of the kneading tools (5).

11. The dough kneading device according to any one of claims 1 to 10, **characterised in that** the nozzle (12) is connected to a control device which drives the kneading tools (5) when the nozzle (12) is in operation.

## Revendications

1. Dispositif de pétrissage de pâte fonctionnant en continu (1) avec un compartiment de cuve (2) disposé entre une entrée (7) et une sortie (8), qui comporte un compartiment de pétrissage (4) dans lequel sont disposés des outils de pétrissage (5), sachant que dans le compartiment de cuve (2) est disposée au moins une buse d'injection (12) et le compartiment de cuve (2) est disposé dans une cuve qui comporte plusieurs sections de paroi (18-23), sachant qu'au moins deux sections de paroi voisines (18-23) forment entre elles un angle et un jet (13) de la buse d'injection (12) est dirigé sous un angle sur au moins une section de paroi (18-23), sachant que le jet renvoyé par cette section de paroi (18-23) est dirigé dans une zone (27) du compartiment de pétrissage (4), qui est masquée par rapport à la buse d'injection (12) par les outils de pétrissage (5).

2. Dispositif de pétrissage de pâte selon la revendication 1, **caractérisé en ce que** les deux sections de paroi (18-23) forment entre elles un angle obtus.

3. Dispositif de pétrissage de pâte selon la revendication 1 ou 2, **caractérisé en ce que** le jet (13) de la buse d'injection (12) est dirigé sur la section de paroi (18-23) dans un angle obtus.

4. Dispositif de pétrissage de pâte selon l'une quelconque des revendications 1 à 3, **caractérisé en ce que** la buse d'injection (12) est logée pouvant tourner autour d'un axe de rotation.

5. Dispositif de pétrissage de pâte selon la revendication 4, **caractérisé en ce que** le jet (13) de la buse d'injection (12) sort de la buse d'injection (12) à une distance radiale par rapport à l'axe de rotation qui s'écarte d'une direction radiale par rapport à l'axe de rotation.

6. Dispositif de pétrissage de pâte selon l'une quelconque des revendications 1 à 5, **caractérisé en ce que** la buse d'injection (12) est logée pouvant être réglée en hauteur.

7. Dispositif de pétrissage de pâte selon la revendication 6, **caractérisé en ce que** la buse d'injection (12) peut être déplacée dans une position en dehors du compartiment de cuve (2).

8. Dispositif de pétrissage de pâte selon la revendication 6 ou 7, **caractérisé en ce que** la buse d'injection (12) est logée dans un palier (29) qui comporte une section dans laquelle la buse d'injection (12) est entourée par un interstice radial (30).

9. Dispositif de pétrissage de pâte selon l'une quelconque des revendications 1 à 8, **caractérisé en ce que** la buse d'injection (12) est disposée dans un couvercle (3) du compartiment de cuve (2).

10. Dispositif de pétrissage de pâte selon l'une quelconque des revendications 1 à 9, **caractérisé en ce que** plusieurs buses d'injection (12) sont disposées l'une derrière l'autre dans une direction parallèle à une direction axiale des outils de pétrissage (5).

11. Dispositif de pétrissage de pâte selon l'une quelconque des revendications 1 à 10, **caractérisé en ce que** la buse d'injection (12) est reliée à un dispositif de commande qui entraîne les outils de pétrissage (5) pendant le fonctionnement de la buse d'injection (12).
